# EUROPEAN PATENT SPECIFICATION

(11) **EP 3 950 253 B1**
(45) Date of publication and mention of the grant of the patent: **21.06.2023**
(21) Application number: 21182708.4
(22) Date of filing: 30.06.2021
(51) Int. Cl.: B29C 33/12, B31B 50/84, B31B 50/81, B29C 45/27, B29C 45/02, B29C 45/26, B29C 45/03, B29C 45/28, B65B 61/18, B29C 45/14, B65B 9/12

(54) **MOLDING APPARATUS FOR MOLDING OPENING DEVICES AND PACKAGING MACHINE HAVING A MOLDING APPARATUS**
FORMEINRICHTUNG ZUM FORMEN VON ÖFFNUNGSVORRICHTUNGEN UND VERPACKUNGSMASCHINE MIT EINER FORMEINRICHTUNG
APPAREIL DE MOULAGE DE DISPOSITIFS D'OUVERTURE ET MACHINE D'EMBALLAGE DOTÉE D'UN APPAREIL DE MOULAGE

(30) Priority: 04.08.2020 EP 20189387
(43) Date of publication of application: 09.02.2022
(73) Proprietor: Tetra Laval Holdings & Finance S.A., 1009 Pully (CH)
(72) Inventor: GOLFIERI, Daniele, 41013 Castelfranco Emilia (IT); STAGLIANO, Armando, 41124 Modena (IT); MARTINI, Pietro, 43122 Parma (IT); MORCIANO, Alessio, 41124 Modena (IT)
(74) Representative: Tetra Pak - Patent Attorneys SE

(56) References cited:
- EP-A1- 2 357 138
- EP-A1- 2 889 116
- WO-A1-00/24560

## Description

### TECHNICAL FIELD

The present invention relates to a molding apparatus for molding opening devices onto a web of packaging material, in particular a web of packaging material having a multilayer structure. Document EP 2 889 116 and EP 2 357 138 relate to packaging apparatuses.

Advantageously, the present invention also relates to a packaging machine for forming sealed packages of a pourable product, in particular a pourable food product, the packaging machine having a molding apparatus for molding opening devices onto a web of packaging material, in particular a web of packaging material having a multilayer structure.

### BACKGROUND ART

As is known, many liquid or pourable food products, such as fruit juice, UHT (ultra-high-temperature treated) milk, wine, tomato sauce, etc., are sold in packages made of sterilized packaging material.

A typical example is the parallelepiped-shaped package for liquid or pourable food products known as Tetra Brik Aseptic (registered trademark), which is made by sealing and folding a laminated packaging material. The packaging material has a multilayer structure comprising a base layer, e.g. of paper or cardboard, covered on both sides with layers of heat-seal plastic material, e.g. polyethylene. In the case of aseptic packages for long-storage products, such as UHT milk, the packaging material also comprises a layer of oxygen-barrier material (an oxygen-barrier layer), e.g. an aluminum foil, which is superimposed on a layer of heat-seal plastic material, and is in turn covered with another layer of heat-seal plastic material forming the inner face of the package eventually contacting the food product.

Packages of this sort are normally produced on fully automatic packaging apparatuses, which advance and sterilize a web of packaging material, which is then formed into a tube and filled with the pourable product before its formation into individual sealed packages.

It is known that some types of packages also comprise respective opening devices, which allow to be manipulated for accessing the pourable product.

In order to provide the packages with the opening devices, the packaging apparatuses also comprise a molding system for molding the opening devices onto the web of packaging material.

A typical molding system comprises a plurality of molding apparatuses each having a mold unit couplable to one respective repeat unit of the web of packaging material. Each mold unit is provided with one respective mold cavity defining the shape of the opening device. Each molding apparatus also comprises one respective injection device coupled to the respective mold unit for injecting a molten polymer into the respective mold cavity.

The molding system also comprises a conveying unit for intermittently advancing and stopping the web of packaging material. During a stop of the web of packaging material, the mold units are engaged to the respective repeat units of the web of packaging material and the respective injection devices inject the molten polymer into the respective mold cavities. Afterwards, the mold units are newly disengaged from the respective repeat units and the web of packaging material advances again until it is stopped again so that the mold units are newly engaged to respective new repeat units.

A typical injection device comprises a cavity for receiving a molten polymer, an inlet for feeding the molten polymer into the cavity, an outlet for allowing an outflow of the molten polymer from the cavity into the respective mold cavity, a valve element configured to selectively open and close the outlet for selectively establishing and impeding a fluidic connection between the cavity and the mold cavity and a pressurizing unit for controlling the pressure of the molten polymer within the cavity.

Inconveniences have been observed with such molding apparatuses when molding complex opening device or opening devices having extended dimensions.

It has also been observed that the size of the molding apparatuses is disadvantageous in case the opening devices have to be applied onto repeat units having sizes below a certain limit size.

Thus, even though such molding apparatuses achieve excellent working results, a desire is felt in the sector to further improve the known molding apparatuses, so as to resolve at least one of the aforementioned inconveniences.

### DISCLOSURE OF INVENTION

It is therefore an object of the present invention to provide in a straightforward and low-cost manner an improved molding apparatus, which resolves at least one of the above-mentioned inconveniences.

It is a further object of the present invention to provide in a straightforward and low-cost manner a packaging machine having a molding apparatus, which resolves in an easy and economical manner at least one of the above-mentioned inconveniences.

According to the present invention, there is provided a molding apparatus as claimed in claim 1.

Preferred non-limiting embodiments of the molding apparatus are claimed in the respective dependent claims.

According to the present invention, there is also provided a packaging machine according to claim 16.

### BRIEF DESCRIPTION OF THE DRAWINGS

Four non-limiting embodiments of the present invention will be described by way of example with reference to the accompanying drawings, in which:
Figure 1 is a schematic view of a packaging machine, with parts removed for clarity;
Figure 2 is a schematic view of a molding apparatus according to a first embodiment of the present invention, with parts removed for clarity;
Figure 3 is a schematic view of a molding apparatus according to a second embodiment of the present invention, with parts removed for clarity;
Figure 4 is a schematic view of a molding apparatus according to a third embodiment of the present invention, with parts removed for clarity; and
Figure 5 is a schematic view of a molding apparatus according to a fourth embodiment of the present invention, with parts removed for clarity.

### BEST MODES FOR CARRYING OUT THE INVENTION

Number 1 indicates as a whole a packaging machine for producing (sealed) packages 2 of a pourable product, in particular a pourable food product such as pasteurized milk, fruit juice, wine, tomato sauce, etc., each package 2 having at least one respective opening device.

In particular, packaging machine 1 produces packages 2 from a web 3 of packaging material.

Preferentially, each opening device is configured to allow to access and/or to outpour, in particular after a manipulation of the opening device, the pourable product packaged within the respective package 2. In particular, the manipulation of the opening device can be reversible or irreversible.

One example of an opening device is a lid-spout assembly, which comprises a spout and a lid, which is configured to selectively close and open a pouring outlet of the spout. In order to access and/or outpour the pourable product from packages 2 being provided with such an opening device removal of the lid is required, which typically is reversible, meaning that the lid can be newly coupled to the spout.

Another example of an opening device is a strip, which can be removed from the respective package 2 for creating an outlet hole and/or for allowing to at least partially separating two portions of the respective package 2 from one another.

Preferentially, web 3 has a multilayer structure (not shown) and comprises at least a layer of fibrous material, such as e.g. a paper or cardboard layer, and at least two layers of heat-seal plastic material, e.g. polyethylene, interposing the layer of fibrous material in between one another. One of these two layers of heat-seal plastic material defines the inner face of package 2 eventually contacting the pourable product.

Preferably but not necessarily, web 3 also comprises a layer of gas- and light-barrier material, e.g. aluminum foil or ethylene vinyl alcohol (EVOH) film, in particular being arranged between one of the layers of the heat-seal plastic material and the layer of fibrous material. Preferentially but not necessarily, web 3 also comprises a further layer of heat-seal plastic material being interposed between the layer of gas- and light-barrier material and the layer of fibrous material.

According to a preferred non-limiting embodiment, web 3 comprises a first face and a second face, in particular the first face being the face of web 3 forming the inner face of the formed package 2 eventually contacting the filled pourable food product.

Preferentially, web 3 comprises a plurality of repeat units, in particular successively arranged (and equally spaced) with respect to one another along web 3. In particular, each repeat unit forms the basis of one respective package 2. In other words, packaging machine 1 is configured to produce packages 2 from web 3 such that each package 2 results from one respective repeat unit.

In particular, each repeat unit is defined by one respective pattern present on web 3. Even more particular, the pattern is substantially identical for all repeat units and may also differ in minor details from the other ones - minor differences may e.g. be the presence of information tags indicating a production day, a production lot, personalized information or similar.

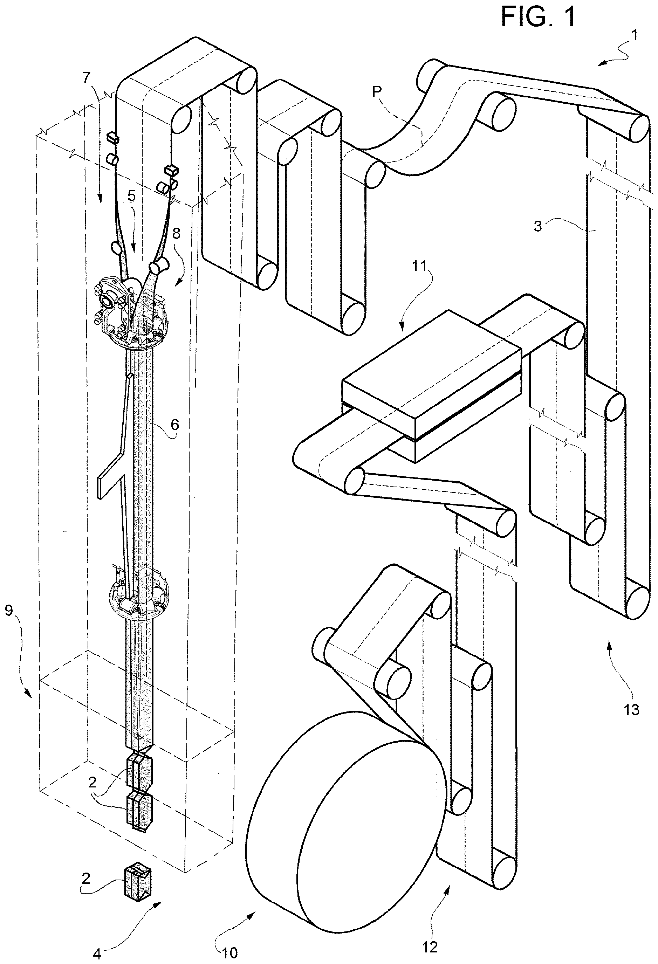

With particular reference to Figure 1, packaging machine 1 comprises at least a package forming apparatus for forming packages 2 from web 3.

Preferentially, the package forming apparatus comprises at least:
- a conveying device 4 configured to advance web 3 along a web advancement path P at least to a tube forming station 5 at which web 3 is formed into a tube 6; and
- a tube forming and sealing device 7 configured to form tube 3 from web 3 and to longitudinally seal tube 3 at tube forming station 6;
- a filling device 8 configured to fill tube 3 with the pourable product; and
- a package forming unit 9 configured to at least form and transversally seal tube 3, preferentially to also transversally cut tube 3, for obtaining (sealed) packages 2.

According to a preferred non-limiting embodiment, tube forming and sealing device 7 is arranged upstream of package forming unit 9 along web advancement path P.

According to a preferred non-limiting embodiment, packaging machine 1 further comprises a sterilization apparatus for sterilizing at least a portion of web 3, preferentially at least the first face, even more preferentially the first face and the second face, in particular at a sterilization station arranged upstream of tube forming station 6 along web advancement path P. In particular, the sterilization apparatus is configured to sterilize web 3 by means of physical and/or chemical sterilization.

According to a preferred non-limiting embodiment, packaging machine 1 also comprises a magazine unit 10 adapted to host and to provide for web 3 at a host station.

Advantageously, packaging machine 1 also comprises a molding system 11 configured to apply one or more opening devices onto web 3, in particular at a molding station.

In particular, molding system 11 is arranged upstream of tube forming and sealing device 7, in particular of tube forming and sealing device 7 and sterilization apparatus, along web advancement path P.

In particular, molding system 11 is positioned downstream of magazine unit 10 along web advancement path P.

According to some preferred non-limiting embodiments, packaging machine 1 also comprises a web buffer unit 12 and/or a web buffer unit 13, in particular web buffer unit 12 and/or web buffer unit 13 being of the variable type (i.e. the buffer capacity of the respective web buffer unit can be (dynamically) varied).

Preferentially, buffer unit 12 is arranged upstream of molding system 11 along web advancement path P.

Preferentially, buffer unit 13 is arranged downstream of molding system 11 along web advancement path P.

According to some preferred non-limiting embodiments, conveying device 4 is configured to advance web 3 from magazine unit 10 to buffer unit 12 and/or molding system 11 in a continuous manner.

According to some preferred non-limiting embodiments, conveying device 4 is configured to advance web 3 from molding system 11 and/or buffer unit 13 to tube forming station 6 in a continuous manner.

Advantageously and as will be described in more detail further below, conveying device 4 is configured to advance web 3 within molding system 11 intermittently.

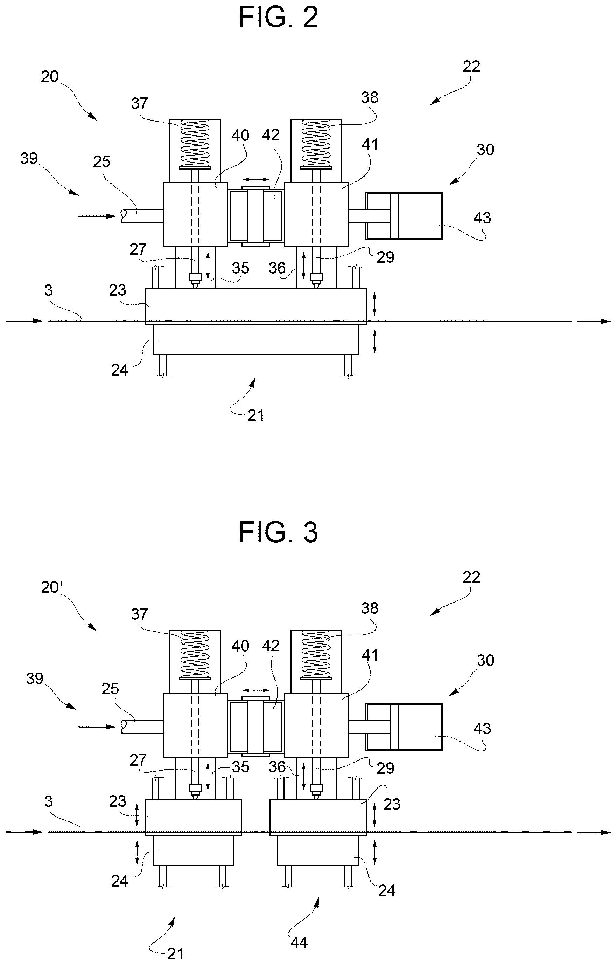

With particular reference to Figure 2, molding system 11 comprises one or more molding apparatuses 20 (only one shown in Figure 2), each one configured to mold one or more opening devices (at a time) onto web 3, in particular onto at least one respective repeat unit. In the specific example embodiment shown in Figure 1, each molding apparatus 20 is configured to mold one respective opening device (at a time).

Preferentially, molding system 11 and/or molding apparatuses 20 comprise(s) a conveyor unit configured to intermittently advance and stop web 3, and in particular each molding apparatus 20 is configured to mold the respective opening device(s) during a stop of web 3.

Preferentially, the conveyor unit is configured to intermittently advance web 3 along a molding portion of path P.

According to some preferred non-limiting embodiments, conveying device 4 comprises the conveyor unit. In particular, conveying device 4 is configured to continuously advance web 3 along the portions of path P different from the molding portion.

Preferentially, molding apparatuses 20 are arranged successively to one another, and in particular equally spaced from one another, along the molding portion.

According to some preferred non-limiting embodiments, web 3 comprises a plurality of holes and, in use, the opening devices are molded onto web 3 about and/or at the holes.

According to some non-limiting embodiment, the holes are through-holes. Alternatively, the holes could be covered by a covering layer. In particular, the covering layer being defined by a portion of one or more layers of web 3.

In particular, each repeat unit comprises one respective hole.

Preferentially, molding system 11 is configured to mold opening devices onto web 3, in particular the repeat units, at the holes.

According to some possible non-limiting embodiments, web 3 already comprises the holes prior to being placed within packaging machine 1, in particular magazine unit 10.

Alternatively or additionally, packaging machine 1 and/or molding system 11 comprises a punching unit configured to punch the holes in web 3, in particular prior to the molding of the opening devices. In other words, the punching unit is arranged upstream of molding apparatuses 20 along web advancement path P.

Advantageously, each molding apparatus 20 comprises:
- at least one mold unit 21 couplable and/or coupled to web 3, in particular at the respective repeat unit; and
- an injection device 22 configured to inject a molten polymer into the respective mold unit 21.

In more detail, each mold unit 21 comprises at least one respective mold cavity for forming one respective opening device. In particular, each mold cavity is formed such to define the shape and/or the form and/or the size of the respective opening device.

According to the non-limiting embodiment shown in Figure 2, each molding apparatus 20 comprises one single mold unit 21, in particular having one single mold cavity and the respective injection device 22 is connected and/or connectable to the respective mold unit 21 such that the respective injection device 22 is configured to direct the molten polymer into the respective (single) mold unit 21, in particular the respective (single) mold cavity.

Preferentially, each mold unit 21 comprises at least a first mold portion 23, a second mold portion 24 and a movement device for moving first mold portion 23 and second mold portion 24 so as to control mold unit 21 in an open configuration in which first mold portion 23 and second mold portion 24 are spaced apart from one another and a closed configuration in which first mold portion 23 and second mold portion 24 are engaged to one another closing thereby the respective mold cavity.

In particular, each first mold portion 23 and the respective second mold portion 24 are arranged such to interpose web 3 between one another. Even more particular, one of first mold portion 23 and the respective second mold portion 24 faces the first face if web 3 and the other one of first mold portion 23 and the respective second mold portion 24 faces the second face of the web 3.

Even more particular, each first mold portion 23 and the respective second mold portion 24 are configured to clamp web 3 between one another with the respective mold unit 21 being controlled in the closed configuration.

Advantageously, each injection device 22 comprises at least:
- a (single) cavity configured to receive the molten polymer;
- an inlet 25 configured to allow for introduction of the molten polymer into the cavity;
- a first outlet configured to allow for an outflow of a first portion of the molten polymer from the cavity;
- a first valve element 27 configured to selectively open and close the first outlet;
- a second outlet configured to allow for an outflow of a second portion of the molten polymer from the cavity;
- a second valve element 29 configured to selectively open and close the second outlet; and
- a pressurizing unit 30 being in fluidic connection with the cavity and configured to control the pressure of and/or to pressurize the molten polymer within the cavity.

It should be noted that each cavity can comprise one or more channels and/or one or more chambers.

In particular, each cavity has a volume defining a maximum polymer dose exiting from the respective injection device 22.

According to some preferred non-limiting embodiments, each injection device 22 is designed such that the volume of the respective cavity is variable and/or adjustable, in particular for adjusting a required polymer dosing.

Preferentially, each injection device 22 comprises a first nozzle 35 having the first outlet and a second nozzle 36 having the second outlet.

Preferentially, first valve element 27 is moveably arranged within first nozzle 35 and second valve element 27 is moveably arranged within second nozzle 36.

According to some preferred non-limiting embodiments, each first valve element 27 and each second valve element 29 is moveable between a respective open position and a respective closed position. In particular, each first valve element 27 is configured to open and close the respective first outlet when being respectively in the open position and in the closed position; and each second valve element 29 is configured to open and close the respective second outlet when being respectively in the open position and in the closed position. Even more particular, when being controlled in the respective open position, each first valve element 27 and each second valve element 28 allow for an outflow of respectively the corresponding first portion and the corresponding second portion of the corresponding molten polymer present within the corresponding cavity.

Preferentially, each first valve element 26 and the respective second valve element 28 are configured to (simultaneously) move from the closed position to the open position, in particular if the pressure exerted by the molten polymer exceeds a respective threshold pressure, in particular as controlled by the respective pressurizing unit 30.

According to some preferred non-limiting embodiments, each injection device 22 also comprises at least a first control element 37 and a second control element 38 configured to exert a respective biasing force so as to bias respectively the respective first valve element 27 and the respective second valve element 29 in the respective closed position. In particular, each first valve element 27 and each second valve element 29 is configured to move from the respective closed position to the respective open position if the pressure exerted by the molten polymer exceeds the respective biasing force.

Preferentially, the respective biasing force of each first control element 37 and the respective second control element 38 equal one another.

According to the example embodiment shown, each first control element 37 and each second control element 38 are passive elements, in particular springs. In particular, passive elements indicates that the passive element exerts the respective biasing force without any outer control and/or input and/or without any actuator.

Alternatively, each first control element 37 and each second control element 38 could be an active element, meaning that the respective element comprises outer sources controlling the exertion of the biasing force. Example active elements are actuators such as pneumatic actuators. In the case of each first control element 37 and each second control element 38 being an active element, the respective first valve elements 27 and the respective second valve elements 29 could be controlled by exerting the biasing force and in particular to also maintain the biasing force even during movement of the respective first valve elements 27 and the respective second valve elements 29 from the closed position to the open position due to the pressure of the molten polymer exceeding the biasing force or to control the respective first valve element 27 and the respective second valve element 29 from the closed position to the open position after detecting that the pressure exceeds the determined pressure.

According to some preferred non-limiting embodiments, each injection device 22 comprises a main body 39 having a first (lateral) portion 40 comprising the respective first outlet and/or the respective first nozzle 35, a second (lateral) portion 41 comprising the respective second outlet and/or the respective second nozzle 36, and a connecting portion 42 connecting the respective first portion 40 and the respective second portion 41 with one another. In particular, each first portion 40 comprises a first zone of the respective cavity, each second portion 41 comprises a second zone of the respective cavity and each connection portion 42 comprises a connecting zone of the respective cavity fluidically connecting the respective first zone with the respective second zone.

In particular, each first outlet is in direct fluidic connection with the respective first zone and each second outlet in direct fluidic connection with the respective second zone. The term "direct fluidic connection" indicates that the respective first portion of the molten polymer or the respective second portion of the molten polymer flows, in use, and with the respective first valve element 27 or the respective second valve element 29 being in the respective open position from the respective first zone or the respective second zone through the respective first outlet or the respective second outlet 27 without passing through any other zone.

Preferentially, each first valve element 27 is moveably arranged within the respective first portion 40 and each second valve element 29 is moveably arranged within the respective second portion 41.

Preferentially, each first portion 40 comprises the respective first nozzle 35 and each second portion 41 comprises the respective second nozzle 36.

Preferentially, each connecting portion 42 is interposed between the respective first portion 40 and the respective second portion 41.

Preferentially, each connecting portion 42 is removably connected to the respective first portion 40 and the respective second portion 41. Even more preferentially, each connecting portion 42 can be exchanged with another connecting portion 42 for varying a spacing between the respective first portion 40 and the respective second portion 41 and/or for varying the volume of the respective cavity.

Preferentially, each inlet 25 is connected to the respective first portion 40 and/or to the respective central portion 42.

Preferentially, each injection device 22 comprises a non-return valve arranged within inlet 25 so as to impede any molten polymer to flow out of the respective cavity through the respective inlet 25.

Preferentially, each injection device 22 also comprises a heater for controlling the temperature of the molten polymer within the cavity, in particular for maintaining the polymer in the molten state.

According to the non-limiting embodiment shown in Figure 2, each pressurizing unit 30 is operatively connected to the respective connecting portion 42 and/or to the respective second portion 41 (see Figure 1).

Preferentially, each pressurizing unit 30 comprises at least one actuator 43, in particular at least one piston-actuator, configured to pressurize the molten polymer present, in use, within the respective cavity.

Even more preferentially, actuator 43 is pneumatically driven.

According to the example embodiment shown in Figure 2, each injection device 22 is connected to the respective mold unit 21 such that the respective first outlet and the respective second outlet direct, in use, respectively the first portion of the molten polymer and the second portion of the molten polymer into the respective mold unit 21, in particular the respective mold cavity. In other words, each injection device 22 is connected to the respective mold unit 21 such that the molten polymer enters, in use, the mold cavity through the respective first outlet and the respective second outlet.

In more detail, each injection device 22 is connected to one respective mold unit 21 such that the respective first outlet and the respective second outlet direct, in use, respectively the first portion of the molten polymer and the second portion of the molten polymer into mold unit 21 at respectively a first injection area and a second injection area distinct from the first injection area, in particular so as to inject the molten polymer into the respective (and same) mold cavity.

In use, packaging machine 1 produces packages 2 of a pourable product, each package 2 having one respective opening device. In particular, packaging machine 1 forms tube 6 from web 3, longitudinally seals tube 6, fills tube 6 with the pourable product and forms, transversally seals and transversally cuts tube 6 so as to obtain packages 2. Preferentially, prior to the formation of tube 6 from web 3, web 3 is sterilized.

Advantageously, packaging machine 1, in particular molding system 11, also applies opening devices onto web 3, in particular prior to the formation of web 3 into tube 6.

Preferentially, packaging machine 1, in particular the punching unit, creates holes within web 3 so that the opening devices are molded by molding system 11 at and/or about the holes.

Operation of molding system 11 occurs in an intermittent manner. In particular, web 3 intermittently advances and stops within molding system 11 and each molding apparatus 20 molds one respective opening device to web 3, in particular the respective repeat unit, during each stop of web 3.

Preferentially, molding apparatuses 20 are operated simultaneously during a stop of web 3.

Preferentially, also operation of the punch unit occurs in an intermittent manner, in particular simultaneous to operation of molding system 11.

In more detail, operation of each molding apparatus 20 comprises the following steps, in particular executed during a stop of web 3:
- engaging the respective molding unit 21 onto web 3, in particular the respective repeat unit;
- loading the respective cavity with the molten polymer;
- controlling the pressure of the molten polymer; and
- opening the first outlet and the second outlet, in particular if the pressure of the molten polymer exceeds a threshold pressure.

Preferentially, during the step of loading, the molten polymer is injected into the cavity through inlet 25.

Preferentially, during the step of controlling the pressure, the respective pressurizing unit 30, in particular the respective actuator 43, controls, in particular increases, the pressure of the molten polymer within the respective cavity. In particular, pressurizing unit 30 reduces the volume of the respective cavity for increasing the pressure of the molten polymer.

Preferentially, during the step of opening the first outlet and the second outlet, the first portion of the molten polymer exits from the respective first outlet and the second portion of the molten polymer exits from the respective second outlet, and in particular flow into the respective mold unit 21, even more particular into the respective mold cavity.

Preferentially, during the step of opening the first outlet and the second outlet, the respective first valve element 27 and the respective second valve element 29 (passively or actively) move, in particular simultaneously move, from the respective closed position to the respective open position.

Preferentially, during the step of engaging mold unit 21, the respective mold unit 21 is controlled from the open configuration to the closed configuration. In particular, the respective first mold portion 23 and the respective second mold portion 24 are engaged to one another.

Operation of each molding apparatus 20 also comprises the steps of:
- closing the respective first outlet and the respective second outlet; and
- withdrawing the respective mold unit 21 from web 3, in particular from the respective repeat unit.

Preferentially, during the step of closing the respective first outlet and the respective second outlet, the respective first valve element 27 and the respective second valve element 29 (passively or actively) move, in particular simultaneously move, from the respective open position to the respective closed position.

Preferentially, during the step of withdrawing mold unit 21, the respective mold unit 21 is controlled from the closed configuration to the open configuration. In particular, the respective first mold portion 23 and the respective second mold portion 24 are moved away from one another.

With reference to Figure 3, number 20' indicates an alternative embodiment of a molding apparatus according to the present invention; as molding apparatus 20' is similar to molding apparatus 20, the following description is limited to the differences between them, and using the same references, where possible, for identical or corresponding parts.

In particular, molding apparatus 20' differs from molding apparatus 20 in comprising mold unit 21 and a further mold unit 44 (similar and/or identical in construction and function to mold unit 21 and not further described in detail) and in that the respective injection device 22 is connected to mold unit 21 and to mold unit 44 such that, in use, the first portion of the molten polymer exiting from the respective first outlet enters the respective mold unit 21, in particular the respective mold cavity of mold unit 21, and the second portion of the molten polymer exiting from the respective second outlet enters the respective mold unit 44, in particular the respective mold cavity of mold unit 44.

Preferentially, mold unit 21 is designed to allow for the molding of a first opening device on web 3, in particular onto a respective first repeat unit, and mold unit 44 is designed to allow for the molding of a second opening device on web 3, in particular onto a respective second repeat unit distinct from the first repeat unit.

In particular, the respective mold cavity of each mold unit 21 is not in fluidic connection with the respective mold cavity of the respective mold unit 44.

As operation of molding apparatus 20' is similar to operation of molding apparatus 20, the following description of the operation of molding apparatus 20' is limited to the differences between the operation of molding apparatus 20 and molding apparatus 20'.

In particular, operation of molding apparatus 20' differs from operation of molding apparatus 20 in that during the step of opening the first outlet and the second outlet, the first portion of the molten polymer enters the respective mold unit 21, in particular the respective mold cavity of the respective mold unit 21, and the second portion of the molten polymer enters the respective mold unit 44, in particular the respective mold cavity of the respective mold unit 44.

In other words, operation of molding apparatus 20' differs from operation of molding apparatus 20 in that molding apparatus 20' allows to mold two distinct opening devices at a time, while molding apparatus 20 allows to mold one single opening device at a time.

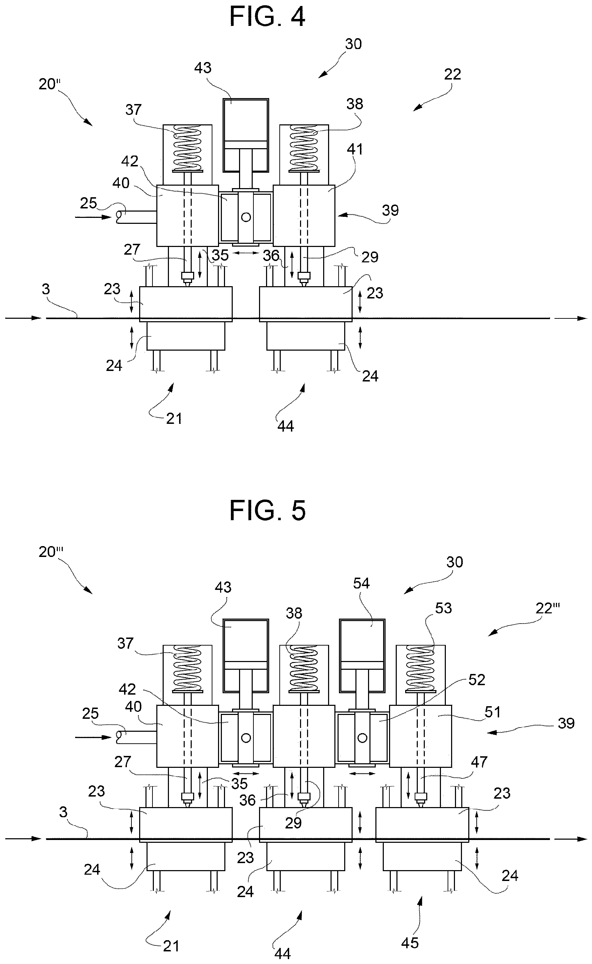

With reference to Figure 4, number 20" indicates an alternative embodiment of a molding apparatus according to the present invention; as molding apparatus 20" is similar to molding apparatus 20', the following description is limited to the differences between them, and using the same references, where possible, for identical or corresponding parts.

In particular, molding apparatus 20'' differs from molding apparatus 20' in that the respective pressurizing unit 30, in particular the respective actuator 43, is operatively connected to the respective connecting portion 42.

As the function of molding apparatus 20" is similar to operation of molding apparatus 20', we refer to the above-provided description.

With reference to Figure 5, number 20‴ indicates an alternative embodiment of a molding apparatus according to the present invention; as molding apparatus 20‴ is similar to molding apparatus 20', the following description is limited to the differences between them, and using the same references, where possible, for identical or corresponding parts.

In particular, molding apparatus 20‴ differs from molding apparatus 20' in also comprising a mold unit 45 (similar and/or identical in construction and function to mold unit 21 and not further described in detail), in particular having a third mold cavity, for molding a third opening device distinct from the first opening device and the second opening device and in also comprising injection device 22‴.

As injection device 22‴ is similar to injection device 22, the following description is limited to the differences between them, and using the same references, where possible, for identical or corresponding parts.

In particular, injection device 22‴ differs from injection device 22 in comprising a third outlet configured to allow for the outflow of a third portion of the molten polymer from the respective cavity and a third valve element 47 (similar and/or identical in construction and function to first valve element 27 and second valve element 29 and therefore not further described) configured to selectively open and close the third outlet.

Preferentially, each injection device 22''' is also connected to mold unit 45 such that the third portion of molten polymer enters into mold unit 45, in particular the respective mold cavity.

Preferentially, each injection device 22‴ also differs from injection device 22 in that the respective main body 39 also comprises a third portion 51 having the respective third outlet and a further connection portion 52 connecting the respective third portion 51 with the respective second portion 41.

Preferentially, each injection device 22‴ also comprises a third control element 53 similar and/or identical in construction and function to first control element 37 and second control element 38 and configured to control movement of the respective third valve element 47.

In particular, each injection device 22‴ is configured such that the respective first valve element 27, the respective second valve element 29 and the respective third valve element 47 simultaneously move from the respective closed position to the respective open position.

Preferentially, each injection device 22‴ also differs from injection device 22 in that the respective pressurizing unit 30 also comprises a further actuator 54 for pressurizing the molten polymer within the respective cavity at two distinct pressurizing area.

In particular, each actuator 43 is operatively connected to the respective connection portion 42 and each actuator 54 is operatively connected to the respective connection portion 53.

As operation of molding apparatus 20‴ is similar to operation of molding apparatus 20', the following description of the operation of molding apparatus 20‴ is limited to the differences between the operation of molding apparatus 20‴ and molding apparatus 20'.

In particular, operation of each molding apparatus 20‴ differs in that during the respective step of opening the first outlet and the second outlet, the respective injection device 22‴ also opens the respective third outlet so as to inject the third portion of the molten polymer into the respective mold unit 45.

The advantages of molding apparatus 20, 20', 20'' or 20‴ and/or molding system 11 and/or packaging machine 1 according to the present invention will be clear from the foregoing description.

In particular, with molding apparatuses 20, 20', 20" or 20‴ it is possible to mold extended opening devices or opening devices having complex shapes.

Another advantage resides in the possibility to also mold opening devices onto repeat units, even though these repeat units present reduced extensions.

Clearly, changes may be made to molding apparatus 20 and/or molding system 11 and/or packaging machine 1 as described herein without, however, departing from the scope of protection as defined in the accompanying claims.

According to one alternative embodiment not shown, each molding apparatus 20 could comprise an injection device 22‴ so that the first portion of the molten polymer, the second portion of the molten polymer and the third portion of molten polymer enters into one respective single mold unit 21, in particular the respective single mold cavity, for molding one single opening device at a time.

According to another alternative embodiment not shown, injection device 22‴ could comprise more than three outlets and respectively more than three valve elements.

According to an alternative embodiment, web 3 could be in the form of a single sheet and the packaging machine is configured to handle a plurality of the single sheets for forming one respective package 2 from each single sheet. According to such an alternative embodiment, molding apparatuses 20, 20', 20", 20‴ are configured to mold the opening devices onto the single sheets.

## Claims

1. Molding apparatus (20, 20', 20", 20‴) for molding an opening device onto a web (3) of packaging material comprising:
- at least one mold unit (21, 44, 45) couplable to the web (3) of packaging material; and
- an injection device (22, 22‴) configured to inject a molten polymer into the mold unit (21, 44, 45);
wherein the injection device (22, 22‴) comprises at least:
- a cavity configured to receive the molten polymer;
- an inlet (25) configured to allow for introduction of the molten polymer into the cavity; **characterized in that** the injection device (22, 22‴) further comprises:
- a first outlet configured to allow for an outflow of a first portion of the molten polymer from the cavity;
- a first valve element (27, 29, 53) configured to selectively open and close the first outlet;
- a second outlet configured to allow for an outflow of a second portion of the molten polymer from the cavity;
- a second valve element (27, 29, 53) configured to selectively open and close the second outlet; and
- a pressurizing unit (30) being in fluidic connection with the cavity and configured to pressurize the molten polymer within the cavity.

2. Molding apparatus according to claim 1, wherein each one the first valve element (27, 29, 53) and the second valve element (27, 29, 53) is moveable between a respective open position and a respective closed position;
wherein the first valve element (27, 29, 53) is configured to open and close the first outlet when being respectively in the open position and in the closed position; and
wherein the second valve element (27, 29, 53) is configured to open and close the second outlet when being respectively in the open position and in the closed position.

3. Molding apparatus according to claim 2, wherein the first valve element (27, 29, 53) and the second valve element (27, 29, 53) are configured to move from the closed position to the open position if the pressure exerted by the molten polymer exceeds a respective threshold pressure.

4. Molding apparatus according to claim 2 or 3, and further comprising at least a first control element (37, 38, 53) and a second control element (37, 38, 53) configured to exert a respective biasing force so as to bias respectively the first valve element and the second valve element in the respective closed position;
wherein the first valve element (27, 29, 53) and the second valve element (27, 29, 53) are configured to move from the respective closed position to the respective open position if the pressure exerted by the molten polymer exceeds the respective biasing force.

5. Molding apparatus according to claim 4, wherein the respective biasing forces of the first control element (37, 38, 53) and the second control element (37, 38, 53) equal one another.

6. Molding apparatus according to any one of claims 3 to 5, wherein the first control element (37, 38, 53) and the second control element (37, 38, 53) are passive elements or active elements.

7. Molding apparatus according to any one of claims 2 to 6, wherein the first valve element (27, 29, 53) and the second valve element (27, 29, 53) are configured to simultaneously move from the closed position to the open position.

8. Molding apparatus according to any one of the preceding claims, wherein the injection device (22, 22‴) comprises a main body (39) having a first portion (40, 41, 51) comprising the first outlet, a second portion (40, 41, 51) comprising the second outlet and a connecting portion (42, 52) interposed between the first portion (40, 41, 51) and the second portion (40, 41, 51);
wherein the first portion (40, 41, 51) comprises a first zone of the cavity, the second portion (40, 41, 51) comprises a second zone of the cavity and the coupling portion (42, 52) comprises a coupling zone of the cavity fluidically connecting the first zone with the second zone.

9. Molding apparatus according to claim 8, wherein the pressurizing unit (30) is operatively connected to the connecting portion (42, 52) or to the second portion (40, 41, 51).

10. Molding apparatus according to claim 8 or 9, wherein the first portion (40, 41, 51) comprises the inlet (25) .

11. Molding apparatus according to any one of the preceding claims, wherein the mold unit (21) comprises a mold cavity for forming one respective opening device and the injection device (22, 22‴) is connected to the mold unit such that the molten polymer enters, in use, the mold cavity through the first outlet and the second outlet.

12. Molding apparatus according to any one of claims 1 to 10, and further comprising a first mold unit (21, 44, 45) having a first mold cavity for forming a first opening device and a second mold unit (21, 44, 45) having a second mold cavity for forming a second opening device;
wherein the injection device (22, 22‴) is connected to the first mold unit (21, 44, 45) and the second mold unit (21, 44, 45) such that a first portion of the molten polymer present within the cavity enters into the first mold cavity through the first outlet and a second portion of the molten polymer present within the cavity enters into the second mold cavity through the second outlet.

13. Molding apparatus according to claim 12, wherein the first mold cavity and the second mold cavity are not in fluidic connection with one another.

14. Molding apparatus according to any one of the preceding claims, and further comprising at least:
- a third outlet configured to allow for an outflow of a third portion of the molten polymer from the cavity; and
- a third valve element (27, 29, 47) configured to selectively open and close the third outlet for selectively allowing and impeding an outflow of the third portion of the molten polymer;
wherein the pressurizing unit (30) comprises a first actuator (43, 54) configured to pressurize the molten polymer from a first pressurizing area and a second actuator (43, 54) configured to pressurize the molten polymer from a second pressurizing area distinct from the first pressurizing area.

15. Molding apparatus according to any one of the preceding claims, wherein a volume of the cavity is adjustable and/or variable.

16. Packaging machine (1) for forming packages (2), each having at least one respective opening device and being filled with a pourable product;
the packaging machine (1) comprises at least one molding apparatus (20, 20', 20", 20‴) according to any one of the preceding claims for molding opening devices onto a web (3) of packaging material; and a package forming apparatus for producing the packages (2) from the web (3) of packaging material.

## Patentansprüche

1. Formvorrichtung (20, 20', 20", 20‴) zum Anformen einer Öffnungsvorrichtung auf einer Bahn (3) aus Verpackungsmaterial umfassend:
mindestens eine Formeinheit (21, 44, 45), die mit der Bahn (3) aus Verpackungsmaterial koppelbar ist; und
eine Einspritzvorrichtung (22, 22‴), dazu konfiguriert, ein geschmolzenes Polymer in die Formeinheit (21, 44, 45) einzuspritzen;
wobei die Einspritzvorrichtung (22, 22‴) mindestens Folgendes umfasst:
einen Hohlraum, dazu konfiguriert, das geschmolzene Polymer aufzunehmen;
einen Einlass (25), dazu konfiguriert, das Einführen des geschmolzenen Polymers in den Hohlraum zu ermöglichen;
**dadurch gekennzeichnet, dass** die Einspritzvorrichtung (22, 22‴) ferner Folgendes umfasst:
einen ersten Auslass, dazu konfiguriert, ein Ausströmen eines ersten Teils des geschmolzenen Polymers aus dem Hohlraum zu ermöglichen;
ein erstes Ventilelement (27, 29, 53), dazu konfiguriert, den ersten Auslass selektiv zu öffnen und zu schließen;
einen zweiten Auslass, dazu konfiguriert, ein Ausströmen eines zweiten Teils des geschmolzenen Polymers aus dem Hohlraum zu ermöglichen;
ein zweites Ventilelement (27, 29, 53), dazu konfiguriert, den zweiten Auslass selektiv zu öffnen und zu schließen; und
eine Druckbeaufschlagungseinheit (30), in Fluidverbindung mit dem Hohlraum und dazu konfiguriert, das geschmolzene Polymer innerhalb des Hohlraums mit Druck zu beaufschlagen.

2. Formvorrichtung nach Anspruch 1, wobei das erste Ventilelement (27, 29, 53) und das zweite Ventilelement (27, 29, 53) jeweils zwischen einer entsprechenden offenen Position und einer entsprechenden geschlossenen Position bewegbar sind;
wobei das erste Ventilelement (27, 29, 53) dazu konfiguriert ist, den ersten Auslass zu öffnen und zu schließen, wenn es sich in der offenen Position beziehungsweise in der geschlossenen Position befindet; und
wobei das zweite Ventilelement (27, 29, 53) dazu konfiguriert ist, den zweiten Auslass zu öffnen und zu schließen, wenn es sich in der offenen Position beziehungsweise in der geschlossenen Position befindet.

3. Formvorrichtung nach Anspruch 2, wobei das erste Ventilelement (27, 29, 53) und das zweite Ventilelement (27, 29, 53) dazu konfiguriert sind, sich von der geschlossenen Position in die offene Position zu bewegen, wenn der durch das geschmolzene Polymer ausgeübte Druck einen entsprechenden Schwellendruck überschreitet.

4. Formvorrichtung nach Anspruch 2 oder 3, ferner umfassend mindestens ein erstes Steuerelement (37, 38, 53) und ein zweites Steuerelement (37, 38, 53), dazu konfiguriert, eine entsprechende Vorspannkraft auszuüben, um das erste Ventilelement beziehungsweise das zweite Ventilelement in die entsprechende geschlossene Position vorzuspannen;
wobei das erste Ventilelement (27, 29, 53) und das zweite Ventilelement (27, 29, 53) dazu konfiguriert sind, sich von der entsprechenden geschlossenen Position in die entsprechende offene Position zu bewegen, wenn der durch das geschmolzene Polymer ausgeübte Druck die entsprechende Vorspannkraft überschreitet.

5. Formvorrichtung nach Anspruch 4, wobei die Vorspannkräfte des ersten Steuerelements (37, 38, 53) beziehungsweise des zweiten Steuerelements (37, 38, 53) gleich sind.

6. Formvorrichtung nach einem der Ansprüche 3 bis 5, wobei das erste Steuerelement (37, 38, 53) und das zweite Steuerelement (37, 38, 53) passive Elemente oder aktive Elemente sind.

7. Formvorrichtung nach einem der Ansprüche 2 bis 6, wobei das erste Ventilelement (27, 29, 53) und das zweite Ventilelement (27, 29, 53) dazu konfiguriert sind, sich gleichzeitig von der geschlossenen Position in die offene Position zu bewegen.

8. Formvorrichtung nach einem der vorhergehenden Ansprüche, wobei die Einspritzvorrichtung (22, 22"') einen Hauptkörper (39) mit einem ersten Abschnitt (40, 41, 51), der den ersten Auslass umfasst, einem zweiten Abschnitt (40, 41, 51) der den zweiten Auslass umfasst, und einem Verbindungsabschnitt (42, 52), der zwischen dem ersten Abschnitt (40, 41, 51) und dem zweiten Abschnitt (40, 41, 51) angeordnet ist, umfasst;
wobei der erste Abschnitt (40, 41, 51) eine erste Zone des Hohlraums umfasst, der zweite Abschnitt (40, 41, 51) eine zweite Zone des Hohlraums umfasst und der Kopplungsabschnitt (42, 52) eine Kopplungszone des Hohlraums umfasst, die die erste Zone fluidisch mit der zweiten Zone verbindet.

9. Formvorrichtung nach Anspruch 8, wobei die Druckbeaufschlagungseinheit (30) mit dem Verbindungsabschnitt (42, 52) oder mit dem zweiten Abschnitt (40, 41, 51) wirkverbunden ist.

10. Formvorrichtung nach Anspruch 8 oder 9, wobei der erste Abschnitt (40, 41, 51) den Einlass (25) umfasst.

11. Formvorrichtung nach einem der vorhergehenden Ansprüche, wobei die Formeinheit (21) einen Formhohlraum zum Ausbilden einer entsprechenden Öffnungsvorrichtung umfasst und die Einspritzvorrichtung (22, 22"') mit der Formeinheit verbunden ist, sodass das geschmolzene Polymer im Gebrauch durch den ersten Auslass und den zweiten Auslass in den Formhohlraum eintritt.

12. Formvorrichtung nach einem der Ansprüche 1 bis 10, ferner umfassend eine erste Formeinheit (21, 44, 45) mit einem ersten Formhohlraum zum Ausbilden einer ersten Öffnungsvorrichtung und eine zweite Formeinheit (21, 44, 45) mit einem zweiten Formhohlraum zum Ausbilden einer zweiten Öffnungsvorrichtung;
wobei die Einspritzvorrichtung (22, 22‴) mit der ersten Formeinheit (21, 44, 45) und der zweiten Formeinheit (21, 44, 45) verbunden ist, sodass ein erster Teil des geschmolzenen Polymers, das in dem Hohlraum vorhanden ist, durch den ersten Auslass in den ersten Formhohlraum eintritt und ein zweiter Teil des geschmolzenen Polymers, das in dem Hohlraum vorhanden ist, durch den zweiten Auslass in den zweiten Formhohlraum eintritt.

13. Formvorrichtung nach Anspruch 12, wobei der erste Formhohlraum und der zweite Formhohlraum nicht in Fluidverbindung miteinander stehen.

14. Formvorrichtung nach einem der vorhergehenden Ansprüche und ferner mindestens Folgendes umfassend:
einen dritten Auslass, dazu konfiguriert, ein Ausströmen eines dritten Teils des geschmolzenen Polymers aus dem Hohlraum zu ermöglichen; und
ein drittes Ventilelement (27, 29, 47), dazu konfiguriert, dass es den dritten Auslass selektiv öffnet und schließt, um selektiv ein Ausströmen des dritten Teils des geschmolzenen Polymers zuzulassen und zu verhindern;
wobei die Druckbeaufschlagungseinheit (30) einen ersten Aktuator (43, 54) umfasst, dazu konfiguriert, das geschmolzene Polymer von einem ersten Druckbeaufschlagungsbereich mit Druck zu beaufschlagen, und einen zweiten Aktuator (43, 54), dazu konfiguriert, das geschmolzene Polymer von einem zweiten Druckbeaufschlagungsbereich, der sich von dem ersten Druckbeaufschlagungsbereich unterscheidet, mit Druck zu beaufschlagen.

15. Formvorrichtung nach einem der vorhergehenden Ansprüche, wobei ein Volumen des Hohlraums einstellbar und/oder variabel ist.

16. Verpackungsmaschine (1) zum Ausbilden von Verpackungen (2), die jeweils mindestens eine Öffnungsvorrichtung aufweisen und mit einem gießfähigen Produkt befüllt werden;
wobei die Verpackungsmaschine (1) mindestens eine Formvorrichtung (20, 20', 20", 20‴) nach einem der vorhergehenden Ansprüche umfasst, zum Anformen von Öffnungsvorrichtungen an eine Bahn (3) aus Verpackungsmaterial; und eine Verpackungsbildungsvorrichtung zum Herstellen der Verpackungen (2) aus der Bahn (3) aus Verpackungsmaterial.

## Revendications

1. Appareil de moulage (20, 20', 20", 20''') pour mouler un dispositif d'ouverture sur une bande (3) de matériau d'emballage comprenant :
- au moins une unité de moule (21, 44, 45) pouvant être couplée à la bande (3) de matériau d'emballage ; et
- un dispositif d'injection (22, 22''') configuré pour injecter un polymère fondu dans l'unité de moule (21, 44, 45) ;
le dispositif d'injection (22, 22‴) comprenant au moins :
- une cavité configurée pour recevoir le polymère fondu ;
- une entrée (25) configurée pour permettre l'introduction du polymère fondu dans la cavité ; **caractérisé en ce que** le dispositif d'injection (22, 22‴) comprend en outre :
- une première sortie configurée pour permettre un écoulement d'une première portion du polymère fondu à partir de la cavité ;
- un premier élément de vanne (27, 29, 53) configuré pour ouvrir et fermer sélectivement la première sortie ;
- une deuxième sortie configurée pour permettre un écoulement d'une deuxième portion du polymère fondu à partir de la cavité ;
- un deuxième élément de vanne (27, 29, 53) configuré pour ouvrir et fermer sélectivement la deuxième sortie ; et
- une unité de mise sous pression (30) étant en raccord fluidique avec la cavité et configurée pour mettre sous pression le polymère fondu à l'intérieur de la cavité.

2. Appareil de moulage selon la revendication 1, dans lequel chaque élément parmi le premier élément de vanne (27, 29, 53) et le deuxième élément de vanne (27, 29, 53) peut être déplacé entre une position ouverte respective et une position fermée respective ;
le premier élément de vanne (27, 29, 53) étant configuré pour ouvrir et fermer la première sortie lorsqu'il est respectivement dans la position ouverte et dans la position fermée ; et
le deuxième élément de vanne (27, 29, 53) étant configuré pour ouvrir et fermer la deuxième sortie lorsqu'il est respectivement dans la position ouverte et dans la position fermée.

3. Appareil de moulage selon la revendication 2, dans lequel le premier élément de vanne (27, 29, 53) et le deuxième élément de vanne (27, 29, 53) sont configurés pour se déplacer de la position fermée à la position ouverte si la pression exercée par le polymère fondu dépasse une pression seuil respective.

4. Appareil de moulage selon la revendication 2 ou la revendication 3, et comprenant en outre au moins un premier élément de commande (37, 38, 53) et un deuxième élément de commande (37, 38, 53) configurés pour exercer une force de sollicitation respective de façon à solliciter respectivement le premier élément de vanne et le deuxième élément de vanne dans la position fermée respective ;
le premier élément de vanne (27, 29, 53) et le deuxième élément de vanne (27, 29, 53) étant configurés pour se déplacer de la position fermée respective à la position ouverte respective si la pression exercée par le polymère fondu dépasse la force de sollicitation respective.

5. Appareil de moulage selon la revendication 4, dans lequel les forces de sollicitation respectives du premier élément de commande (37, 38, 53) et du deuxième élément de commande (37, 38, 53) sont égales l'une à l'autre.

6. Appareil de moulage selon l'une quelconque des revendications 3 à 5, dans lequel le premier élément de commande (37, 38, 53) et le deuxième élément de commande (37, 38, 53) sont des éléments passifs ou des éléments actifs.

7. Appareil de moulage selon l'une quelconque des revendications 2 à 6, dans lequel le premier élément de vanne (27, 29, 53) et le deuxième élément de vanne (27, 29, 53) sont configurés pour se déplacer simultanément de la position fermée à la position ouverte.

8. Appareil de moulage selon l'une quelconque des revendications précédentes, dans lequel le dispositif d'injection (22, 22‴) comprend un corps principal (39) ayant une première portion (40, 41, 51) comprenant la première sortie, une deuxième portion (40, 41, 51) comprenant la deuxième sortie et une portion de raccordement (42, 52) interposée entre la première portion (40, 41, 51) et la deuxième portion (40, 41, 51) ;
la première portion (40, 41, 51) comprenant une première zone de la cavité, la deuxième portion (40, 41, 51) comprenant une deuxième zone de la cavité et la portion de couplage (42, 52) comprenant une zone de couplage de la cavité raccordement de façon fluidique la première zone à la deuxième zone.

9. Appareil de moulage selon la revendication 8, dans lequel l'unité de mise sous pression (30) est raccordée de façon fonctionnelle à la portion de raccordement (42, 52) ou à la deuxième portion (40, 41, 51).

10. Appareil de moulage selon la revendication 8 ou la revendication 9, dans lequel la première portion (40, 41, 51) comprend l'entrée (25).

11. Appareil de moulage selon l'une quelconque des revendications précédentes, dans lequel l'unité de moule (21) comprend une cavité de moule pour former un dispositif d'ouverture respectif et le dispositif d'injection (22, 22‴) est raccordé à l'unité de moule de telle sorte que le polymère fondu entre, lors de l'utilisation, dans la cavité de moule par la première sortie et la deuxième sortie.

12. Appareil de moulage selon l'une quelconque des revendications 1 à 10, et comprenant en outre une première unité de moule (21, 44, 45) ayant une première cavité de moule pour former un premier dispositif d'ouverture et une deuxième unité de moule (21, 44, 45) ayant une deuxième cavité de moule pour former un deuxième dispositif d'ouverture ;
le dispositif d'injection (22, 22''') étant raccordé à la première unité de moule (21, 44, 45) et à la deuxième unité de moule (21, 44, 45) de telle sorte qu'une première portion du polymère fondu présent à l'intérieur de la cavité entre dans la première cavité de moule par la première sortie et qu'une deuxième portion du polymère fondu présent à l'intérieur de la cavité entre dans la deuxième cavité de moule par la deuxième sortie.

13. Appareil de moulage selon la revendication 12, dans lequel la première cavité de moule et la deuxième cavité de moule ne sont pas en raccord fluidique l'une avec l'autre.

14. Appareil de moulage selon l'une quelconque des revendications précédentes, et comprenant en outre au moins :
- une troisième sortie configurée pour permettre un écoulement d'une troisième portion du polymère fondu à partir de la cavité ; et
- un troisième élément de vanne (27, 29, 47) configuré pour ouvrir et fermer sélectivement la troisième sortie pour permettre et empêcher sélectivement une sortie de la troisième portion du polymère fondu ;
l'unité de mise sous pression (30) comprenant un premier actionneur (43, 54) configuré pour mettre sous pression le polymère fondu à partir d'une première zone de mise sous pression et un deuxième actionneur (43, 54) configuré pour mettre sous pression le polymère fondu à partir d'une deuxième zone de mise sous pression distincte de la première zone de mise sous pression.

15. Appareil de moulage selon l'une quelconque des revendications précédentes, dans lequel un volume de la cavité est réglable et/ou variable.

16. Machine d'emballage (1) pour former des emballages (2), ayant chacun au moins un dispositif d'ouverture respectif et étant rempli d'un produit pouvant être versé ;
la machine d'emballage (1) comprend au moins un appareil de moulage (20, 20', 20'', 20''') selon l'une quelconque des revendications précédentes pour mouler des dispositifs d'ouverture sur une bande (3) de matériau d'emballage ; et un appareil de formation d'emballage pour produire les emballages (2) à partir de la bande (3) de matériau d'emballage.
